# EUROPÄISCHE PATENTSCHRIFT

(11) **EP 0 867 688 B1**
(45) Veröffentlichungstag und Bekanntmachung des Hinweises auf die Patenterteilung: **08.09.2004**
(21) Anmeldenummer: 98104971.1
(22) Anmeldetag: 19.03.1998
(51) Int. Cl.: G01B 11/02, G01B 11/16

(54) **Wegmessvorrichtung**
Displacement measuring device
Dispositif de mesure du déplacement

(30) Priorität: 25.03.1997 DE 19712407
(43) Veröffentlichungstag der Anmeldung: 30.09.1998
(73) Patentinhaber: GLÖTZL GESELLSCHAFT FÜR BAUMESSTECHNIK mbH, D-76287 Rheinstetten (DE)
(72) Erfinder: Glötzl, Franz, 76287 Rheinstetten (DE); Voet, Marc, 76337 Waldbronn (DE); Glötzl, Jürgen, 76287 Rheinstetten (DE)
(74) Vertreter: Lasch, Hartmut Dipl.-Ing.

(56) Entgegenhaltungen:
- WO-A-88/05905
- DE-C- 3 902 997
- PATENT ABSTRACTS OF JAPAN vol. 014, no. 059 (P-1000), 2. Februar 1990 & JP 01 284702 A (NKK CORP), 16. November 1989

## Beschreibung

Die Erfindung betrifft eine Wegmeßvorrichtung insbesondere zur Verwendung in einem Extensometer zur Messung und Überwachung von Bewegungen in der Fels- und Bodenmechanik.

Zur Messung von sehr kleinen Wegen und/oder sehr langsam ablaufenden Bewegungen insbesondere Verschiebungen und Verlagerungen in der Bodenmechanik sind sogenannte Extensometer bekannt, die einen oder mehrere optische Dehnungsmeßstreifen besitzen, die aus zumindest einer Lichtleitfaser, insbesondere einer Glasfaser bestehen, in die Licht eingeleitet und am austrittsseitigen Ende hinsichtlich seines Spektrums untersucht wird. Wenn an dem mit dem Dehnungsmeßstreifen versehenen Prüfkörper oder Abschnitt eine Dehnung auftritt, wird auch die Glasfaser gedehnt, so daß sich eine Dichteänderung in der Glasfaser einstellt, die die Reflexions- und Beugungseigenschaften der Glasfaser verändert. Dieses als "Bragg-Gitter" bekannte Phänomen macht sich am austrittsseitigen Ende der Glasfaser durch eine Änderung des meßbaren Lichtspektrums bemerkbar. Durch Auswertung des Spektrums des am Ende der Glasfaser austretenden Lichts läßt sich eine Änderung im Dehnungszustand der Glasfaser bestimmen, so daß auch die Bewegungen und Dehnungen des mit dem Dehnungsmeßstreifen versehenen Prüfkörpers sich ermitteln lassen.

Obwohl mit dem genannten optischen Dehnungsmeßstreifen mittels des Bragg-Gitters relativ genaue Dehnungs- bzw. Wegmessungen möglich sind, ist damit der Nachteil einer sehr eingeschränkten Anwendbarkeit verbunden. Es hat sich gezeigt, daß ein optischer Dehnungsmeßstreifen mit Glasfaser bereits bei einer Dehnung von ca. 4 % reißt bzw. bricht, so daß größere Dehnungen nicht erfaßt werden können.

Die WO-A-88/05905, von der im Oberbegriff des Anspruchs 1 ausgegangen wird, zeigt eine Wegmeßvorrichtung mit einem Ankerteil in Form einer Kette. Infolge der zu erfassenden Bewegung erfährt die Kette eine Querverformung, die direkt auf eine die Kette durchdringende optische Faser übertragen wird, die dadurch ebenfalls quer zu ihrer Längserstreckung verformt wird. Diese Verformung der optischen Faser führt zu einer Änderung der Lichtleiteigenschaften in der optischen Faser, die erfaßt werden und woraus sich Rückschlüsse auf die zu messende Bewegung ableiten lassen. Die Kette ist teilweise mit einer elastischen Umhüllung versehen, die für die Rückstellung der Kette in den Ausgangszustand sorgt, wenn die zu erfassende Bewegung nicht mehr vorliegt. Da auch bei dieser Wegmeßvorrichtung die Bewegung der Kette direkt auf die optische Faser übertragen wird, sind auch hier die oben genannten Nachteile gegeben.

Der Erfindung liegt die Aufgabe zugrunde, eine Wegmeßvorrichtung der genannten Art zu schaffen, mit der auch größere Dehnungen bzw. Wege zuverlässig erfaßt werden können. Diese Aufgabe wird erfindungsgemäß bei einer Wegmeßvorrichtung mit den Merkmalen des Anspruchs 1 gelöst. Diese weist ein den zu messenden Weg aufnehmendes, verschiebliches Ankerteil, zumindest einen Lichtleiter, der in Abhänigkeit der Verschiebung des Ankerteils dehnbar ist, und eine Auswerteeinrichtung auf, mittels der die sich in Abhängigkeit der Dehnung ändernden Reflexions- bzw. Transmissionseigenschaften des Lichtleiters erfaßbar sind. Dabei ist zwischen dem Ankerteil und dem Lichtleiter eine den Verschiebeweg des Ankerteils in einen kleineren Dehnungsweg des Lichtleiters umsetzende Reduktionsvorrichtung in Form einer Feder angeordnet.

Das Ankerteil, bei dem es sich vorzugsweise um einen in einem Gehäuse verschieblich gelagerten Meßstift handelt, wird mit dem zu messenden Weg bzw. der zu messenden Dehnung entweder unmittelbar oder mittelbar beaufschlagt. Die Verschiebung des Ankterteils wird jedoch nicht direkt auf den Lichtleiter, der zumindest eine Lichtleitfaser, insbesondere eine Glasfaser umfaßt, als Dehnungsweg aufgebracht, sondern über die zwischengeschaltete Feder in einem vorgewählten Verhältnis vermindert. Auf diese Weise können auch relativ große, von dem Ankerteil erfaßte Bewegungen mittels des Lichtleiters in eingangs genannter Weise erfaßt und ausgewertet werden.

Um die Bewegung des Ankerteils mittels der Reduktionsvorrichtung in eine kleinere Bewegung bzw. Dehnung des Lichtleiters umzusetzen, ist die Feder vorgesehen. Somit wird die Bewegung des Anlcerteils über die Feder in eine von der Federkonstante abhängige Kraft umgesetzt, die auf den Lichtleiter aufgebracht wird und dort in Abhängigkeit von dessen geometrischen und werkstoffmäßigen Parametern zu einer Dehnung führt. Die Verwendung der Feder bringt den Vorteil mit sich, daß bei Verwendung einer sehr weichen Feder auch große Bewegungen des Ankerteils in einfacher Weise in eine nur geringe Kraft und somit eine entsprechend kleine Dehnung des Lichtleiters umgesetzt werden können. Darüber hinaus kann die Feder auch gleichzeitig dazu dienen, das Ankerteil unter einer gewissen Vorspannung zu halten, um somit dessen spielfreie Verschiebung zu erreichen.

In bevorzugter Ausgestaltung der Erfindung ist vorgesehen, daß die Lichtleitfaser im Inneren eines Gehäuses verläuft bzw. gespannt ist und mit einem im Gehäuse verschieblich geführten Gleitstück in Verbindung steht, an dem die Feder angreift. Es hat sich als vorteilhaft erwiesen, das Gleitstück als Umlenkrolle auszubilden, so daß die Lichtleitfaser schlaufenförmig in dem Gehäuse angeordnet sein kann. Dabei können die beiden freien Enden der Lichtleitfaser an der einen Seite des Gehäuses festgelegt sein, während die Lichtleitfaser am anderen Ende des Gehäuses um die Umlenkrolle herumgeführt ist, so daß eine von dem Ankerteil bzw. der Feder auf die Umlenkrolle aufgebrachte Kraft auf zwei parallel verlaufende Lichtleitfaserabschnitte aufgeteilt wird. Alternativ ist es jedoch auch möglich, die Lichtleitfaser einbahnig zu spannen. Zum Schutz der Lichtleitfaser sollte diese in einer Schutzhülle aus Kunststoff oder Stahl aufgenommen und entlang dieser beweglich sein.

Um eine zuverlässige Verschiebung des Gleitstücks innerhalb des Gehäuses zu erreichen und um insbesondere eine Verdrillung der Lichtleitfaser zu vermeiden, ist das Gleitstück vorzugsweise mit Führungsstiften versehen, die in auf der Innenwandung des Gehäuses ausgebildete Längsnuten eingreifen und entlang diesen verschiebbar sind. Auf diese Weise ist eine definierte Bewegung des Gleitstücks relativ zum Gehäuse sichergestellt. Für das Gleitstück und/oder das Ankerteil können axiale Anschläge vorgesehen sein, um seine axiale Bewegung und somit die Dehnung der Lichtleitfaser zu begrenzen, so daß ein Reißen der Lichtleitfaser vermieden ist.

Das Gleitstück kann oberflächlich poliert sein und/oder aus einem Material mit geringem Reibungskoeffizienten bestehen, um die Reibungsverluste bei Einleiten der Kraft in die Lichtleitfaserabschnitte gering zu halten. Darüber hinaus sollte das Gleitstück möglichst leicht ausgebildet bzw. aus einem leichten Material bestehen.

Die Lichtleitfaser ist so eingebaut, daß sie in jedem Betriebszustand unter axialer Zugspannung steht. Um die Lichtleitfaser vor Beginn der Wegmessung in eine gewünschte Anfangs- bzw. Ausgangsstellung des Spannungszustandes zu bringen, ist vorzugsweise vorgesehen, daß die Lichtleitfaser in einem Spannstück fixiert ist, das mittels einer Einstellvorrichtung relativ zum Gehäuse verstellbar ist, wodurch die Spannung der Lichtleitfaser verändert werden kann. Als Einstellvorrichtung kann beispielsweise eine Einstellschraube verwendet werden.

Für die Befestigung der Lichtleitfaser an dem Spannstück hat es sich bewährt, die Lichtleitfaser zumindest an einem Ende in einem Kapillarrohr festzulegen, das seinerseits an dem Spannstück gehalten ist. Für die Festlegung in dem Kapillarrohr sollte eine kraftschlüssige Verbindung beispielsweise eine Verklebung verwendet werden, so daß bei übermäßigen Zugkräften die Verklebung nachgibt, ohne daß die Lichtleitfaser reißt. Dabei ist der Kleber so ausgelegt, daß die Klebung sich löst, bevor die Lichtleitfaser eine plastische Dehnung erfährt.

Die Dehnungsänderung der Lichtleitfaser führt in genannter Weise zu deren Dichteänderung, wodurch sich die Reflexions- und Beugungseigenschaften verändern ("Bragg-Gitter"). Das durch die Lichtleitfaser hindurchgeleitete Licht tritt somit in Abhängikeit von deren Dehnungszustand mit unterschiedlichem Spektrum aus, was mittels eines an sich bekannten Spektrometers erfaßt und ausgewertet werden kann.

In Weiterbildung der Erfindung kann vorgesehen sein, dem Lichtleiter einen weiteren Referenz-Lichtleiter parallel zu schalten, wobei der weitere Referenz-Lichtleiter jedoch durch das Ankerteil keine Dehnung erfährt, sondern nur dazu dient, die Temperatureinflüße zu erfassen. Hinsichtlich der Anordnung und des Anschlusses kann der Referenz-Lichtleiter mit dem Lichtleiter übereinstimmen.

Wenn während einer Messung das Ankerteil aus einer Stellung, in der die Lichtleitfaser eine relativ große Zugdehnung aufweist, in eine Stellung zurückkehrt, die einer geringeren Zugdehnung der Lichtleitfaser entspricht, kann eventuell die elastische Rückstell- bzw. Rückzugskraft der Lichtleitfaser nicht ausreichen, um die am Gleitstück auftretenden Reibungskräfte zu überwinden. Zur Unterstützung der aus Dehnungsverminderung der Lichtleitfaser resultierenden Rückstellkraft kann deshalb eine im wesentlichen parallel zur Rückstellkraft der Lichtleitfaser wirksame Rückstellfeder vorgesehen sein, wobei die Federkonstante der Rückstellfeder wesentlich geringer als die Federkonstante der Feder sein sollte, so daß die von der Rückstellfeder auf das Gleitstück ausgeübte Kraft sehr gering ist. Vorzugsweise erstreckt sich die Rückstellfeder zwischen dem Gleitstück und dem Gehäuse.

Weitere Einzelheiten und Merkmale der Erfindung sind aus der folgenden Beschreibung eines Ausführungsbeispieles unter Bezugnahme auf die Zeichnung ersichtlich. Es zeigen:
- Fig. 1: einen Vertikalschnitt durch eine erfindungsgemäße Wegmeßvorrichtung in schematischer Darstellung und
- Fig. 2: einen Horizontalschnitt durch die Wegmeßvorrichtung gemäß Fig. 1.

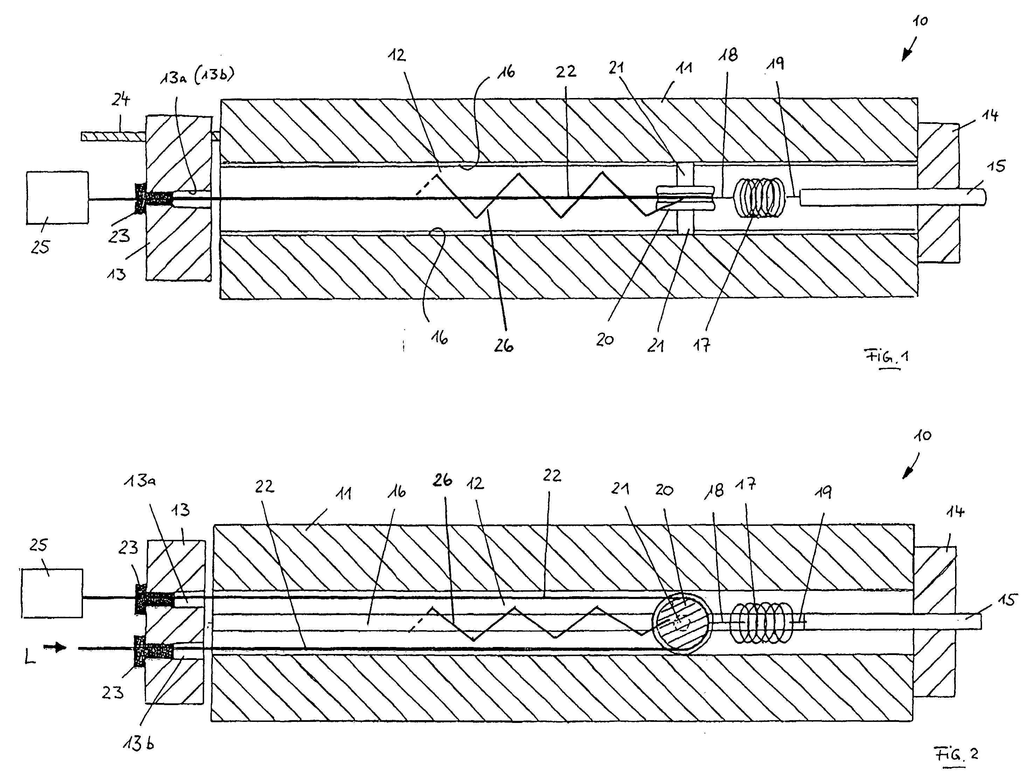

Gemäß den Fig. 1 und 2 weist eine Wegmeßvorrichtung 10 ein im wesentlichen rohrförmiges Gehäuse 11 auf, das an der einen, gemäß den Fig. rechten Seite mit einer Abdeckung 14 verschlossen ist, die von einem Meßstift 15 durchdrungen ist, der in der Abdeckung 14 axial verschieblich gehalten ist.

Der Meßstift 15 ist an seinem inneren, im Gehäuse 11 angeordneten Ende über ein nicht näher dargestelltes Verbindungselement 19 mit einem Ende einer Feder 17 verbunden, die an ihrem anderen Ende über ein Verbindungselement 18 an einem längs des Gehäuses 11 verschieblichen Gleitstück in Form einer Umlenkrolle 20 angreift. Dabei ist sichergestellt, daß von dem Meßstift 15 keine Drehbewegungen auf die Feder 17 übertragen werden, da diese zu Torsionskräften in der Feder 17 führen würden. Wie insbesondere Fig. 1 zeigt, besitzt die Umlenkrolle 20 beidseitig vorstehende Führungsstifte 21, die jeweils in eine auf der Innenwandung des Gehäuses 11 ausgebildete Längsnut 16 verschieblich eingreifen. Auf diese Weise ist die Umlenkrolle 20 im Gehäuse 11 axial verschiebbar, jedoch drehfest gehalten.

An dem der Abdeckung 14 abgewandten Ende des Gehäuses 11 ist eine Spannplatte 13 vorgesehen, deren Abstand zu der Stirnseite des Gehäuses 11 mittels einer Einstellschraube 24 veränderbar ist. In der Spannplatte 13 sind zwei parallele Bohrungen 13a, 13b ausgebildet. Eine unter Zugspannung stehende Glasfaser 22 verläuft von der Außenseite der Spannplatte 13 durch die Bohrung 13a hindurch in das Innere 12 des Gehäuses 11, um die Umlenkrolle 20 herum und von dort wieder zurück durch die Bohrung 13b auf die Außenseite der Spannplatte 13. Mit Hilfe zweier Kapillarrohre 23 ist die Glasfaser 22 an der Spannplatte 13 gehalten. Wie Fig. 2 zeigt, kann Licht L an einem Ende der Glasfaser 22 in diese eingeleitet werden, wobei das am anderen Ende der Glasfaser 22 austretende Licht mittels eines nur schematisch angedeuteten Spektrometers 25 erfaßt und ausgewertet wird.

An dem Gleitstück 20 greift desweiteren ein Ende einer sehr weichen Rückstellfeder 26 an, die an ihrem anderen Ende in nicht dargestellter Weise am Gehäuse 11 gelagert ist. Die von der Rückstellfeder 26 auf das Gleitstück 20 ausgeübte Rückstellkraft, die parallel zur Rückstellkraft der Glasfaser 22, d.h. gemäß den Fig. nach links wirkt, ist deutlich geringer, als die mittels der Feder 17 aufgebrachte Kraft.

Wenn der Meßstift 15 eine Zugkraft erhält, d. h. um ein geringes Maß aus dem Gehäuse 11 herausgezogen wird, führt dies zu einer Dehnung der Feder 17, wodurch an der Umlenkrolle 20 eine von der Federkonstante der Feder 17 abhängige Zugkraft als Reaktionskraft auftritt, die in die beide dargestellten Abschnitte der Glasfaser 22 eingeleitet wird und zu deren Dehnung führt. Gleichzeitig wird die Rückstellfeder 26 gedehnt. Aufgrund der Dehnung der Glasfaser 22 ändert sich das Spektrum des am ausgangsseitigen Ende der Glasfaser austretetenden Lichtes, was mittels des Spektrometers 25 festgestellt und erfaßt wird.

Wenn der Meßstift 15 anschließend um ein geringes Maß in das Gehäuse 11 hineingeschoben wird, verringert sich die Dehnung der Feder 17 und somit die von der Feder 17 auf die Umlenkrolle 20 ausgeübte Kraft, so daß die Umlenkrolle 20 aufgrund der elastischen Rückstellkraft der Glasfaser 22 eine Verschiebung im Gehäuse 11 erfährt, was durch die Kraft der Rückstellfeder 26 unterstützt wird.

Obwohl in den Zeichnungen eine Federanordnung gezeigt ist, die bei einer nach außen gerichteten Bewegung des Meßstiftes 15 zu einer Zugkraft in der Glasfaser führt, kann die Anordnung auch so getroffen sein, daß eine in das Gehäuse 11 hineingerichtete Verschiebung des Meßstiftes 15 zu einer Zugkraft in der Glasfaser führt.

## Patentansprüche

1. Wegmeßvorrichtung mit einem den zu messenden Weg aufnehmenden, verschieblichen Ankerteil (15), zumindest einem Lichtleiter (22), der in Abhängigkeit von der Verschiebung des Ankerteils (15) dehnbar ist, und einer Auswerteeinrichtung (25), mittels der die sich in Abhängigkeit von der Dehnung ändernden Reflexions- bzw. Transmissionseigenschaften des Lichtleiters (22) erfaßbar sind, dadurch gekenntzeichnet, daß zwischen dem Ankerteil (15) und dem Lichtleiter (22) eine den Verschiebeweg des Ankerteils (15) in einen kleineren Dehnungsweg des Lichtleiters (22) umsetzende Reduktionsvorrichtung in Form einer Feder (17) angeordnet ist.

2. Wegmeßvorrichtung nach Anspruch 1, **dadurch gekennzeichnet, daß** der Lichtleiter zumindest eine Lichtleitfaser (22) umfaßt.

3. Wegmeßvorrichtung nach Anspruch 2, **dadurch gekennzeichnet, daß** die Lichtleitfaser (22) in einem Gehäuse (11) gespannt ist und mit einem im Gehäuse (11) verschieblich geführten Gleitstück (20) in Verbindung steht, an dem die Feder (17) angreift.

4. Wegmeßvorrichtung nach Anspruch 3, **dadurch gekennzeichnet, daß** das Gleitstück eine Umlenkrolle (20) aufweist und daß die Lichtleitfaser (22) in dem Gehäuse (11) schlaufenförmig verläuft.

5. Wegmeßvorrichtung nach Anspruch 3 oder 4, **dadurch gekennzeichnet, daß** das Gleitstück (20) Führungsstifte (21) aufweist, die in auf der Innenwandung des Gehäuses (11) ausgebildete Längsnuten (16) eingreifen.

6. Wegmeßvorrichtung nach einem der Ansprüche 2 bis 5, **dadurch gekennzeichnet, daß** die Lichtleitfaser eine Glasfaser ist.

7. Wegmeßvorrichtung nach einem der Ansprüche 2 bis 6, **dadurch gekennzeichnet, daß** die Lichtleitfaser (22) in einem Spannstück (13) fixiert ist.

8. Wegmeßvorrichtung nach Anspruch 7, **dadurch gekennzeichnet, daß** die Lichtleitfaser (22) in einem am Spannstück (13) gehaltenen Kapillarrohr (23) verklebt ist.

9. Wegmeßvorrichtung nach Anspruch 7 oder 8, **dadurch gekennzeichnet, daß** das Spannstück (13) mittels einer Einstellvorrichtung (24) relativ zum Gehäuse (11) verstellbar ist.

10. Wegmeßvorrichtung nach einem der Ansprüche 2 bis 9, **dadurch gekennzeichnet, daß** in der Lichtleitfaser (22) ein Bragg-Gitter angeordnet ist.

11. Wegmeßvorrichtung nach einem der Ansprüche 1 bis 10, **dadurch gekennzeichnet, daß** das Ankerteil ein Meßstift (15) ist.

12. Wegmeßvorrichtung nach einem der Ansprüche 1 bis 11, **dadurch gekennzeichnet, daß** der Lichtleiter (22) unter einer Zugspannung gehalten ist und daß eine parallel zur Rückstellkraft des Lichtleiters (22) wirksame Rückstellfeder (26) angeordnet ist.

13. Wegmeßvorrichtung nach Anspruch 12, **dadurch gekennzeichnet, daß** die Federkonstante der Rückstellfeder (26) wesentlich geringer als die Federkonstante der Feder (17) ist.

14. Wegmeßvorrichtung nach Anspruch 12 oder 13, **dadurch gekennzeichnet, daß** die Rückstellfeder (26) zwischen dem Gleitstück (20) und dem Gehäuse (11) wirksam ist.

15. Wegmeßvorrichtung nach einem der Ansprüche 1 bis 14 zur Verwendung in einem Extensometer zur Messung und Überwachung von Bewegungen in der Fels- und Bodenmechanik.

## Claims

1. Path measuring device with a displaceable armature part (15) receiving the path to be measured, at least one light guide (22), which is extensible as a function of the displacement of the armature part (15), and an evaluating device (25) by means of which it is possible to determine the reflection or transmission characteristics of the light guide (22) varying as a function of the extension, **characterized in that** between the armature part (15) and the light guide (22) is positioned a reducing device in the form of a spring (17) transforming the displacement path of the armature part (15) into a smaller extension path of the light guide (22).

2. Path measuring device according to claim 1, **characterized in that** the light guide comprises at least one optical fibre (22).

3. Path measuring device according to claim 2, **characterized in that** the optical fibre (22) is tensioned in a housing (11) and is connected to a slider (20) displaceably guided in the housing (11) and on which acts the spring (17).

4. Path measuring device according to claim 3, **characterized in that** the slider has a guide pulley (20) and that the optical fibre (22) runs in loop-like manner in the housing (11).

5. Path measuring device according to claim 3 or 4, **characterized in that** the slider (20) has guide pins (21), which engage in longitudinal grooves (16) formed on the inner wall of the housing (11).

6. Path measuring device according to one of the claims 2 to 5, **characterized in that** the optical fibre is a glass fibre.

7. Path measuring device according to one of the claims 2 to 6, **characterized in that** the optical fibre (22) is fixed in a tensioning piece (13).

8. Path measuring device according to claim 7, **characterized in that** the optical fibre (22) is bonded in a capillary tube (23) held on the tensioning piece (13).

9. Path measuring device according to claim 7 or 8, **characterized in that** the tensioning piece (13) is adjustable relative to the housing (11) by means of an adjusting device (24).

10. Path measuring device according to one of the claims 2 to 9, **characterized in that** a Bragg grating is located in the optical fibre (22).

11. Path measuring device according to one of the claims 1 to 10, **characterized in that** the armature part is a measuring pin (15).

12. Path measuring device according to one of the claims 1 to 11, **characterized in that** the light guide (22) is held under a tensile stress and that a restoring spring (26) acting parallel to the restoring force of the light guide (22) is provided.

13. Path measuring device according to claim 12, **characterized in that** the spring constant of the restoring spring (26) is much lower than the spring constant of the spring (17).

14. Path measuring device according to claim 12 or 13, **characterized in that** the restoring spring (26) acts between the slider (20) and the housing (11).

15. Path measuring device according to one of the claims 1 to 14 for use in an extensometer for measuring and monitoring rock and soil mechanics movements.

## Revendications

1. Dispositif de mesure de déplacement comprenant une pièce d'ancrage (15) déplaçable relevant la distance à mesurer, au moins un conducteur optique (22) étirable en fonction du déplacement de la pièce d'ancrage (15), et un dispositif d'exploitation (25) permettant de déterminer les caractéristiques de réflexion ou de transmission du conducteur optique (22) variant en fonction de l'extension, **caractérisé en ce qu'**un dispositif de réduction convertissant la distance de déplacement de la pièce d'ancrage (15) en une distance d'extension plus petite du conducteur optique (22) est disposé sous la forme d'un ressort (17) entre la pièce d'ancrage (15) et la conducteur optique (22).

2. Dispositif de mesure de déplacement selon la revendication 1, **caractérisé en ce que** le conducteur optique présente au moins une fibre optique (22).

3. Dispositif de mesure de déplacement selon la revendication 2, **caractérisé en ce que** la fibre optique (22) est tendue dans un carter (11) et reliée à une pièce coulissante (20) guidée déplaçable dans le carter (11), sur laquelle le ressort (17) vient en prise.

4. Dispositif de mesure de déplacement selon la revendication 3, **caractérisé en ce que** la pièce coulissante présente une poulie de renvoi (20) et **en ce que** la fibre optique (22) s'étend à la manière d'une boucle dans le carter (11).

5. Dispositif de mesure de déplacement selon la revendication 3 ou 4, **caractérisé en ce que** la pièce coulissante (20) présente des goujons de guidage (21) entrant en prise dans des rainures longitudinales (16) conformées sur la face intérieure du carter (11).

6. Dispositif de mesure de déplacement selon l'une quelconque des revendications 2 à 5, **caractérisé en ce que** la fibre optique est une fibre de verre.

7. Dispositif de mesure de déplacement selon l'une quelconque des revendications 2 à 6, **caractérisé en ce que** la fibre optique (22) est fixée dans une pièce de tension (13).

8. Dispositif de mesure de déplacement selon la revendication 7, **caractérisé en ce que** la fibre optique (22) est collée dans un tube capillaire (23) monté sur la pièce de tension (13).

9. Dispositif de mesure de déplacement selon la revendication 7 ou 8, **caractérisé en ce que** la pièce de tension (13) est réglable par rapport au carter (11) au moyen d'un dispositif de réglage (24).

10. Dispositif de mesure de déplacement selon l'une quelconque des revendications 2 à 9, **caractérisé en ce que** l'on dispose un réseau de Bragg dans la fibre optique (22).

11. Dispositif de mesure de déplacement selon l'une quelconque des revendications 1 à 10, **caractérisé en ce que** la pièce d'ancrage est une tige de mesure (15).

12. Dispositif de mesure de déplacement selon l'une quelconque des revendications 1 à 11, **caractérisé en ce que** le conducteur optique (22) est maintenu sous un effort de tension et **en ce qu'**est disposé un ressort de rappel (26) agissant parallèlement à la force de rappel du conducteur optique (22).

13. Dispositif de mesure de déplacement selon la revendication 12, **caractérisé en ce que** la raideur de rappel du ressort de rappel (26) est sensiblement inférieure à la raideur de rappel du ressort (17).

14. Dispositif de mesure de déplacement selon la revendication 12 ou 13, **caractérisé en ce que** le ressort de rappel (26) agit entre la pièce coulissante (20) et le carter (11).

15. Dispositif de mesure de déplacement selon l'une quelconque des revendications 1 à 14 pour l'utilisation dans un extensomètre pour la mesure et la surveillance de déplacements dans la mécanique des roches et des sols.
